# EUROPEAN PATENT APPLICATION

(11) **EP 3 985 850 A1**
(43) Date of publication of application: **20.04.2022**
(21) Application number: 21199144.3
(22) Date of filing: 27.09.2021
(51) Int. Cl.: H02M 1/00, H02M 1/32, H02M 7/08, H02M 7/25, H02M 7/23

(54) **POWER CONVERSION SYSTEM**

(30) Priority: 16.10.2020 JP 2020174973
(71) Applicant: Hitachi, Ltd., Tokyo 100-8280 (JP)
(72) Inventor: URAI, Hajime, Tokyo 100-8280 (JP); NAKAO, Noriya, Tokyo 100-8280 (JP); KAMIZUMA, Hiroshi, Tokyo 100-8280 (JP); FURUKAWA, Kimihisa, Tokyo 100-8280 (JP); TOMIYASU, Kunihiko, Tokyo 100-8280 (JP); NAKATSU, Kinya, Tokyo 100-8280 (JP)
(74) Representative: Manitz Finsterwald Patent- und Rechtsanwaltspartnerschaft mbB

(57) **Abstract**

A power conversion system is provided in which a surge current withstand specification of a short-circuit switch bypassing a failed unit can be reduced, and reliability and redundancy of the system can be improved by applying a small and economical element to the short-circuit switch.

The power conversion system includes a plurality of power converter units connected in series with use of semiconductor switching elements and, also, includes: switching elements provided in an input terminal and/or an output terminal of the power converter unit and bypassing the power converter unit; and a switching controller for controlling timing in which the switching elements are turned into a conductive state.

## Description

### BACKGROUND

The present invention relates to a power conversion system.

In recent years, many power converters have been in use where an AC power is converted to a DC power or vice versa. This kind of power converter is applied also to a field of the high voltage. In such a case, for example, a single-phase power converter including semiconductor switching element (Insulated-gate bipolar transistor: IGBT etc.) is used, and the plurality of single-phase power converters are connected in series. With such a configuration, a voltage equal to or greater than a withstand voltage of the switching element can be outputted. Its application to a high voltage direct current system (HVDC), a static synchronous compensator (STATCOM), a motor-drive inverter, and so on is expected.

As an example of a power conversion system including a plurality of single-phase power converter units connected in series, there is known a system in which single-phase inverter devices (hereinafter, referred to as "cell inverter devices") are connected in series to form one single-phase inverter device group and, for example, by combining such groups in three phases, a three-phase inverter system is formed (see Japanese Unexamined Patent Application Publication No. Hei 10(1998)-75580).

In such a series multiplex converter system, when one cell inverter device becomes abnormal, not only a normal power cannot be supplied to a load but also a normal operation of another faultless single-phase power converter may be affected. When a failure (abnormality) occurs to one cell inverter device, in order to continue operations without suspending all the cell inverter devices, a configuration is known in which there are provided an output disconnection switch inserted in an output line of a single-phase power converter unit and a bypass switch in a bypass circuit, including the disconnection switch, for bypassing an output of each single-phase power converter (see Japanese Unexamined Patent Application Publication No. 2000-245168).

### SUMMARY

However, in such a conventional series-converter system, at the failure of the power converter unit, the failure of the short-circuit switch bypassing the failed unit is not considered. When the short-circuit switch has a failure, the failed unit cannot be invalidated and a whole power conversion system has to be stopped.

During the failure of the power converter unit, a surge current accompanied by a transitional high-frequency vibration may occur. Therefore, it is necessary to use a short-circuit switch of a greater surge current withstand amount so that the short-circuit switch may not have a failure due to the surge current. On the other hand, the short-circuit switch of a grater surge current withstand amount tends to be larger and the weight of the short-circuit switch becomes greater. For this reason, the power amount per unit weight of the converter system becomes smaller and the weight efficiency of the power conversion amount decreases.

The present invention is made in view of the above, and its object is to provide a power conversion system in which a surge current withstand specification of a short-circuit switch bypassing a failed unit can be reduced and, reliability and redundancy of the system can be improved by applying a small and economical element to the short-circuit switch.

In order to solve the above problem, the power conversion system of the present invention is a power conversion system which includes a plurality of power converter units connected in series, and includes: short-circuit switches provided on an input side and/or an output side of the power converter unit and bypassing the power converter unit; and a controller for controlling timing in which the short-circuit switches are turned into a conductive state.

Other modes for carrying out the present invention will be explained in the embodiments to be described later.

According to the present invention, the surge current withstand specification of the short-circuit switch which bypasses a failed unit can be reduced, and reliability and redundancy of the system can be improved by applying a small and economical element to the short-circuit switch.

### BRIEF DESCRIPTION OF THE DRAWINGS

Fig. 1 is a diagram showing an overall configuration of a power conversion system according to a first embodiment of the present invention;
Fig. 2 is a diagram showing a configuration of a short-circuit switch unit connected to an input terminal of a power converter unit of the power conversion system according to a first embodiment of the present invention;
Fig. 3 is a waveform chart showing an example of a surge current at the time of the short circuit fault in the power conversion system according to the first embodiment of the present invention;
Fig. 4 is a diagram showing a configuration of a switching controller of a power conversion system according to a second embodiment of the present invention;
Fig. 5 is a diagram showing a configuration of a switching controller of a power conversion system according to a third embodiment of the present invention; and
Fig. 6 is a diagram showing a configuration of a switching controller of a power conversion system according to a fourth embodiment of the present invention.

### DETAILED DESCRIPTION

Hereinafter, embodiments of the present invention will be explained in detail with reference to the drawings.

### (First Embodiment)

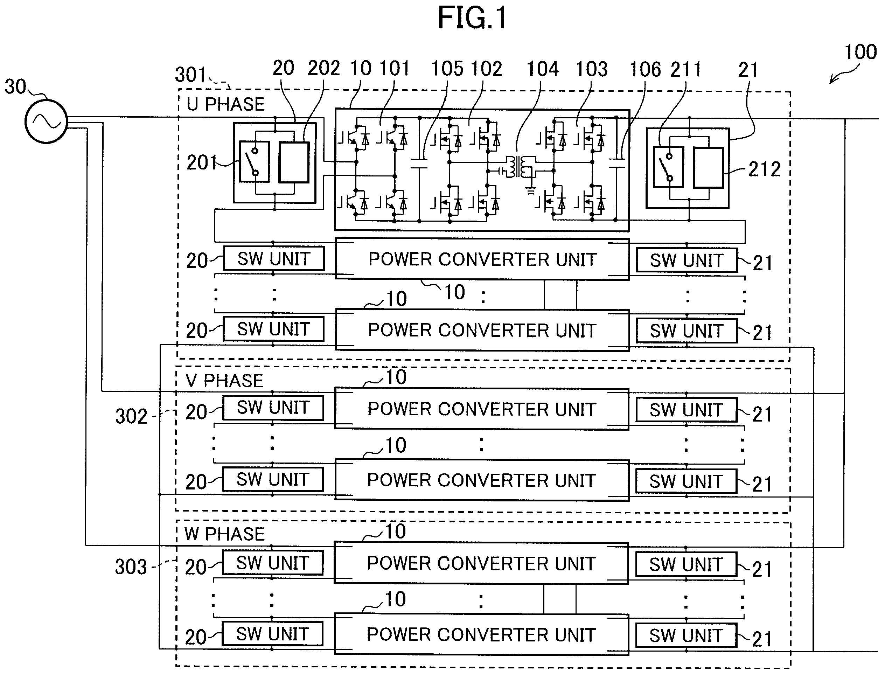

Fig. 1 is a diagram showing an overall configuration of the power conversion system according to a first embodiment of the present invention. The present embodiment is an example applied to a multiplex power converter using a plurality of high-frequency AC link converters.

### [Configuration of Power Conversion System]

The power conversion system 100 includes a plurality of single-phase power converter units 10 (hereinafter, referred to as "power converter units 10"), connected in series and formed with use of semiconductor switching elements.

The power conversion system 100 further includes: a short-circuit switch unit 20 on an input side having a switching element 201 provided in an input terminal (input side) of the power converter unit 10 and bypassing the power converter unit 10: and a short-circuit switch unit 21 on an output side having a switching element 211 provided in an output terminal (output side) of the power converter unit 10 and bypassing the power converter unit 10.

The plurality of power converter units 10 and the short-circuit switch units 20 and 21 form single-phase power converter groups 301, 302, and 303. The three single-phase power converter groups 301, 302, and 303 convert a three-phase (U, V, and W phases) AC power supply 30 into DC power.

The plurality of power converter units 10 are identical to each other with respect to the configuration. Also, the short-circuit switch units 20 and 21 provided in the input terminal and the output terminal of the power converter unit 10 are identical to each other with respect to the configuration.

### <Power Converter Unit 10>

Now, the power converter unit 10 will be explained using one in the single-phase power converter group 301 of Fig. 1 as an example. The power converter unit 10 shown here is a high-frequency link converter unit.

The power converter unit 10 includes: an AC/DC converter 101 converting AC to DC; a high-frequency DC/AC inverter 102 converting DC to a high-frequency AC; a high-frequency AC/DC converter 103 converting a high-frequency AC to DC; an isolation transformer (high-frequency transformer) 104; and smoothing capacitors 105 and 106.

The high-frequency DC/AC inverter 102 and the high-frequency AC/DC converter 103 are connected through the isolation transformer 104. For the high-frequency AC, for example, a carrier-wave frequency of a kHz order is used.

The AC/DC converter 101, the high-frequency DC/AC inverter 102, and the high-frequency AC/DC converter 103 are converters and an inverter of full bridging using IGBTs (Insulated Gate Bipolar Transistors) as semiconductor switching elements. As the semiconductor switching element, for example, a power MOSFET (Power Metal-Oxide-Semiconductor Field-Effect Transistor) may be used.

In the present embodiment, although the high-frequency AC link converter is used as one example of the power converter unit 10, any kind of unit may be used as the power converter unit 10. Moreover, in Fig. 1, the converter or inverter itself, or combination of those may be changed.

Single-phase power converter groups 301, 302, and 303 are formed of multiplex-connection power converter units 10, and three sets of the single-phase power converter groups 301, 302, and 303 convert the three-phase AC power source 30 to DC.

### <Short-Circuit Switch Units 20 and 21>

In the single-phase power converter group 301, the short-circuit switch units 20 and 21 are provided between an input terminal and an output terminal of the power converter unit 10. The short-circuit switch unit 20 is connected to an AC terminal of the three-phase AC power source 30 in the example of Fig. 1.

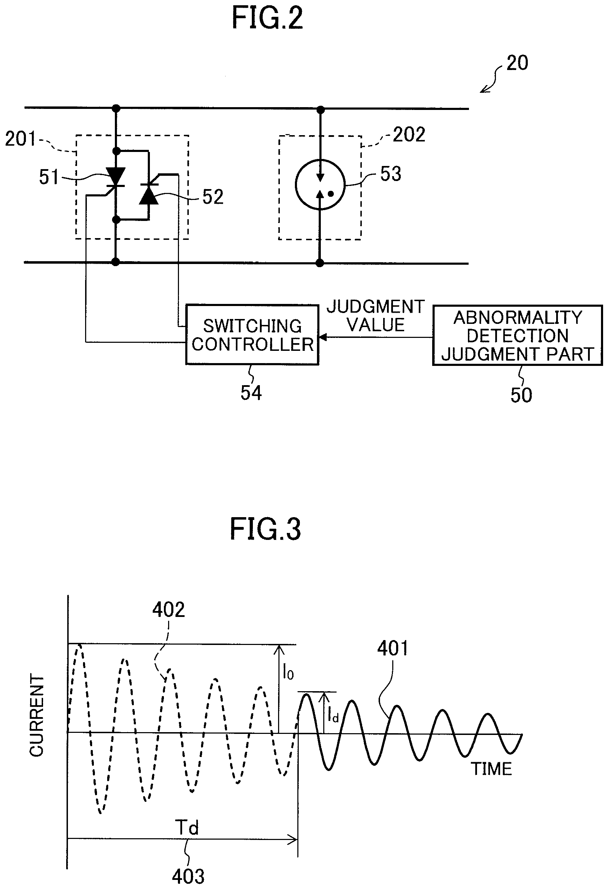

The short-circuit switch units 20 and 21 includes: switching elements 201 and 211 (short-circuit switches); a switching controller 54 (see Fig. 2); and overvoltage suppressor elements 202 and 212. Moreover, an abnormality detection judgment value is inputted to the switching controller 54 from an abnormality detection judgment part 50 (see Fig. 2).

The short-circuit switch unit 20 connected to the input terminal and the short-circuit switch unit 21 connected to the output terminal of the power converter unit 10 may be the same or may differ respect to the configuration and specification. Moreover, the switching element 201 of the short-circuit switch unit 20 and the switching element 211 of the short-circuit switch unit 21 may be the same or may differ with respect to the specification. Similarly, the overvoltage suppressor element 202 of the short-circuit switch unit 20 and the overvoltage suppressor element 212 of the short-circuit switch unit 21 are not necessarily the same with respect to the specification.

### <Switching Elements 201 and 211>

Switching elements 201 and 211 are short-circuit switches bypassing the failed power converter unit at the time of the failure.

The switching element 201 turns conductive at the time of the failure on the input circuit side (AC/DC converter 101 side) in the power converter unit 10, and bypasses the power converter unit 10.

The switching element 211 turns conductive at the time of the failure on the output circuit side (high-frequency AC/DC converter 103 side) in the power converter unit 10, and bypasses the power-converter unit 10.

When a bipolar type is used, the switching elements 201 and 211 can be formed of a single element.

In response to a gate voltage from the switching controller 54, timing in which the switching elements 201 and 211 are turned into a conductive state is controlled (to be described later).

It is desirable to apply a semiconductor switching element to the switching elements 201 and 211. However, switches of machine contact types, such as an in-air relay switch and a vacuum switch, are also applicable.

The switching elements 201 and 211 can be formed of, for example, a mechanical relay switch driven by an electromagnetic coil or a solid state switch such as a thyristor and a MOSFET.

By applying the semiconductor switching element to the short-circuit switch, a circuit can be short-circuited by a millimeter-sec order. Therefore, in the element failure inside the single-phase power converter unit, the failure current which flows in the element is bypassed in a short time, and a destructive failure of the element can be prevented. Thus, cascading of the failure can be minimized, and the reliability can be further improved.

### <Overvoltage Suppressor Elements 202 and 212>

The overvoltage suppressor elements 202 and 212 are connected in parallel with the switching elements 201 and 211, and their conductive states are switched by the voltage.

The overvoltage suppressor elements 202 and 212 may be nonlinear-resistance elements used as a low resistor when a high voltage is impressed. Although not limited to a varistor or a gas arrester, in the case of an internal destruction of the switching element forming an inverter or a converter, since a high frequency voltage of decay nature occurs at extinction of an arc after a short-circuit failure shifts to an arc discharge, it is desirable to use a gas arrester with a large passage-withstand current I²t capacity.

When a steep surge voltage of an external lightning impulse needs to be protected, an MOV (Metal Oxide Varistor) of a fast operating time may be provided. Also, a gas arrester and an MOV having different characteristics may be connected in parallel. In addition, when the switching elements 201 and 211 have a sufficiently high withstand-overvoltage amount, the overvoltage suppressor elements 202 and 212 can be omitted.

The overvoltage suppressor element 202 and 212 are nonlinear-resistance elements which serve as a low resistor when a high voltage is impressed. To the nonlinear-resistance element, for example, a gas arrester 53 using electric discharge or a varistor (to be described later) using a nonlinear resistance such as a zinc oxide (ZnO) is applied. The gas arrester 53 allows only a surge voltage to pass to the ground side when the surge voltage occurring instantly is impressed.

In addition, the switching element 201 of the short-circuit switch unit 20 and the switching element 211 of the short-circuit switch unit 21 with respect to the specification, and the overvoltage suppressor element 202 of the short-circuit switch unit 20 and the overvoltage suppressor element 212 of the short-circuit switch unit 21 with respect to the specification are not necessarily the same, respectively.

Moreover, the overvoltage suppressor elements 202 and 212 can be omitted when the short-circuit switch units 20 and 21 have sufficient withstand voltages.

### [Configuration of Short-Circuit Switch Units 20 and 21]

Fig. 2 shows a configuration of the short-circuit switch unit 20 connected to an input terminal (input side) of the power converter unit 10. The short-circuit switch unit 20 connected to the input terminal and the short-circuit switch 21 connected to the output terminal may be the same with respect to the configuration. Hereinafter, the short-circuit switch unit 20 of the input terminal will be explained as an example.

The switching element 201 shown in Fig. 2 is a semiconductor switching element and, for example, thyristors 51 and 52 (short-circuit switches) connected by reverse polarity are applied.

By connecting the two thyristors 51 and 52 by reverse polarity, the switching element 201 can be electrically conductive in both directions.

As in the short-circuit switch 21, when applied to a direct-current terminal, one thyristor element may be used (in Fig. 2, the thyristor 52 is omitted) to make it a single polarity.

The overvoltage suppressor element 202 is, for example, a gas arrester 53. The gas arrester 53 is provided in the short-circuit switch unit 20 (see Fig. 1), and is used to prevent an internal failure of the power conversion system 100. Its use is different from that of a gas arrester for protecting a power supply or a communication line of an electronic device from an induced lightening surge.

### <Abnormality Detection Judgment Part 50>

The abnormality detection judgment part 50 detects a short circuit failure (abnormality) of the power converter unit 10, and outputs an abnormality detection judgment value to the switching controller 54 (control part).

In the power conversion system 100 (see Fig. 1), in order to control arms to which the power converter unit 10 is connected in a cascading manner, a voltage and current sensor (measurement means) which measure a voltage and an electric current of each arm is provided (not shown).

Moreover, the power conversion system 100 is provided with the abnormality detection judgment part 50 (abnormality judgment means) which judges the abnormality of the power converter unit 10 based on a detection result of the voltage and current sensor (measurement means). According to the present embodiment, the abnormality detection judgment value of the abnormality detection judgment part 50 (abnormality judgment means) with which the power conversion system 100 is provided is inputted to the switching controller 54. Therefore, the abnormality detection judgment part 50 is not a constituent element of the short-circuit switch units 20 and 21.

### <Switching Controller 54>

The switching controller 54 controls ON and OFF of a simplex or a plurality of switches based on an abnormality detection judgment value from the abnormality detection judgment part 50.

The switching controller 54 controls timing in which the switching element 201 is turned conductive.

When the short circuit failure of the power converter unit 10 is detected, the switching controller 54 turns the short-circuit switch conductive after a predetermined delay time.

The switching controller 54 is a gate driver which drives gates of the thyristors 51 and 52 when the thyristors 51 and 52 are used for the switching element 201 shown in Fig. 2. More specifically, the switching controller 54 is the one in which a logic circuit for delaying is added to an electronic circuit forming the gate driver.

The switching controller 54 serves as a trip circuit which drives a solenoid, for example, when a mechanical switch is used for the switching element. Below, a case where a thyristor is used for the switching element will be explained as an example.

Hereinafter, an operation of the power conversion system 100 configured as above will be explained.

### (Explanation of Principle)

In the power conversion system 100, by the switching element 201 of the short-circuit switch unit 20, when a single-phase power converter of one power converter unit 10 has a failure, the power converter unit 10 is separated from the system, and an output of the power converter unit 10 is bypassed by the switching element 211 of the short-circuit switch unit 21. Accordingly, the single-phase power converter related to the failure is removed from the system, and the operation can be continued as it is. As a result, the electric power supply to the load will be continued by the in-series output power of the remaining faultless power converter unit 10, and the reliability of the power supply is improved.

The short-circuit switch can be formed of, for example, a mechanical relay switch driven by an electromagnetic coil or a solid state switch such as a thyristor and a MOSFET (Metal-oxide-semiconductor field-effect transistor). By applying the semiconductor switching element to the short-circuit switch, a circuit can be short-circuited by a millimeter-sec order. Therefore, at the time of an element failure inside the single-phase power converter unit, the failure current which flows in the element is bypassed in a short time, and a destructive failure of the element can be prevented. Thus, cascading of the failure can be minimized and the reliability can be further improved.

At the time of the failure of the power converter unit 10, however, a surge current accompanied by a transitional high-frequency vibration may occur. Therefore, it is necessary to use a short-circuit switch of a greater surge current withstand amount so that the short-circuit switch may not have a failure due to the surge current. On the other hand, the short-circuit switch of a greater surge current withstand amount tends to be larger and the weight of the short-circuit switch becomes greater. Therefore, a power amount per unit weight of the converter system becomes smaller and the weight efficiency of the power conversion amount decreases.

The present inventors have noted that it becomes possible to prevent the failure of the short-circuit switch caused by the surge current if the short-circuit switch is closed after the surge current generated during the failure of the power converter unit 10 has decreased.

Accordingly, the power conversion system 100 includes a switching controller 54 which controls timing in which the switching element 201 (short-circuit switch) is turned into a conductive state. When using thyristors 51 and 52 for the switching element 201, the switching controller 54 inputs an ON command by setting a delay time Td (see Fig. 3) in gates of the thyristors 51 and 52.

### (Explanation of Operation)

Fig. 3 is a waveform chart showing an example of a surge current at the time of a short circuit failure in the power converter unit 10. A surge current at the time of a failure is shown along the vertical axis and a lapse of time is shown along the horizontal axis.

The broken line in Fig. 3 shows a surge current waveform 402 at the time of the short circuit failure. The solid line in Fig. 3 shows a thyristor-providing current waveform 402 flowing in the thyristors 51 and 52 (see Fig. 2). Moreover, arrow Td in Fig. 3 shows a delay time 403 from the detection of the short-circuit failure until the thyristors 51 and 52 becomes conductive. In addition, the delay time 403 is determined by a floating capacitance component C peculiar to the unit, an inductor component L, etc. Therefore, a set value is established in advance. Arrow Io in Fig. 3 shows a peak value of the surge current waveform 402 at the time of the short-circuit failure.

The switching controller 54 (see Fig. 2) sets the delay time 403 (delay time Td) in gates of thyristors 51 and 52, and inputs the ON command. Thus, in timing after the delay time 403, the thyristors 51 and 52 are turned conductive.

Here, for the sake of simplicity, it is assumed that ON-resistance of the short-circuit switch is sufficiently small as compared to a resistance value of a failure point of the power converter unit 10 and the failure current commutates to the thyristors 51 and 52 in an instant. In this regard, the delay time 403 (delay time Td) may be considered to be several times as much as the frequency of the failure current. For example, the withstand surge current of the short-circuit switch can be reduced to one half by setting it to one half or lower of the peak value (peak value Io in Fig. 3) of the surge current. Thus, a small short-circuit switching element is realized.

Now, a relationship between the surge current during the failure and the delay time Td will be explained as a supplementary.

When the single-phase power converter of one power converter unit 10 has a failure, in the power conversion system 100, an output power of the power converter unit 10 is bypassed by the switching element 211 of the short-circuit switch unit 21. Basically, it serves the purpose if it is short-circuited and if it is short-circuited at the failure point. However, if the failure at the point continues for a second or two seconds, it generates heat, causing a secondary damage.

According to the present embodiment, the frequency of delay time 403 (delay time Td) is MHz and is a short period of at most a millimeter-sec order. For this reason, there is no overall influence caused by setting the delay time 403 and putting in the thyristors 51 and 52. That is, a problem arises if a surge current has been kept flowing by the order of several seconds to several minutes in the short-circuited portion. However, in the present embodiment, the delay time 403 is set for only a short period of at most millimeter-sec order, which is considered to be not influential.

### [Effects]

As explained above, the power conversion system 100 (see Fig. 1) of the present embodiment includes a plurality of power converter units 10 (see Fig. 1), connected in series, formed with use of semiconductor switching elements, and includes: switching elements 201 and 211 (short-circuit switches) (see Fig. 2) provided in the input terminal and/or the output terminal of the power converter unit 10 and bypassing the power converter unit 10; and a switching controller 54 (see Fig. 2) for controlling timing in which the switching elements 201 and 211 (short-circuit switches) are turned into a conductive state.

With the above configuration, when one power converter has a failure, the power converter unit 10 is bypassed by the switching elements 201 and 211, and an operation of the power conversion system 100 can be continued.

By applying the semiconductor switching element to the short-circuit switch, a circuit can be short-circuited by a millimeter-sec order. Therefore, when an element failure occurs inside the power converter unit 10, a failure current flowing in the element is bypassed in a short time, and a destructive failure of the element can be prevented. Thus, cascading of the failure can be minimized, and the reliability can be further improved.

In particular, when commutating a surge current to the short-circuit switch, a current value flowing through the short-circuit switch can be suppressed. Thus, the surge current withstand specification of the short-circuit switch bypassing the failure unit can be reduced, and a small and economical element can be applied to the short-circuit switch. Accordingly, occurrence of the failure in the short-circuit switch can be suppressed, and reliability and redundancy of the system can be improved.

### (Second Embodiment)

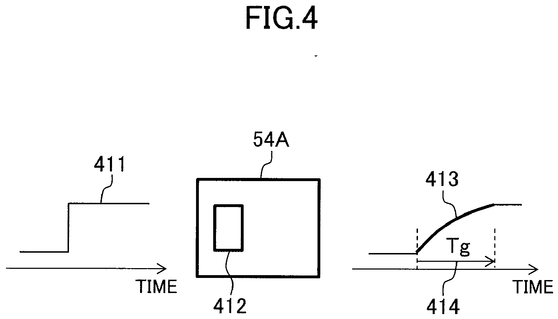

Fig. 4 is a diagram showing a configuration of a switching controller 54A of the power conversion system according to a second embodiment of the present invention. The switching controller 54A of the present embodiment is used in place of the switching controller 54 of Fig. 2.

The overall configuration of the power conversion system according the second embodiment of the present invention is the same as that in Fig. 1.

As shown in Fig. 4, the switching controller 54A includes a gate controller 412. As in the case of the switching controller 54 shown in Fig. 2, to the switching controller 54A, a signal (abnormality detection judgment value 411 of the power converter unit 10) detecting a short circuit failure of the power converter unit 10 is inputted from the abnormality detection judgment part 50.

The gate controller 412 has an arithmetic unit mounted therein. The arithmetic unit inputs the abnormality detection judgment value 411 of the power converter unit 10, and determines a gate voltage waveform 413 of the thyristors 51 and 52 for starting the thyristors 51 and 52 gently.

According to the present embodiment, for a period of several cycles of the failure current, for example, a gate-voltage start delay time 414 (gate-voltage start delay time Tg) of the thyristors 51 and 52 is gently started.

According to the present embodiment, the gate controller 412 gently starts the gate voltage impressed to the thyristors 51 and 52 to a rated gate voltage when the short-circuit failure of the power converter unit 10 is detected.

It becomes possible to prevent a current larger than the withstand surge current of thyristors 51 and 52 from flowing by limiting the short-circuit current by ON-resistance when the gate voltage of thyristors 51 and 52 is lower than the rated gate voltage.

The first embodiment is an example where the abnormal detection judgment value 411 shown in Fig. 4 is delayed as it is (the waveform is not changed) . In the present embodiment, however, the short-circuit current is limited by ON-resistance when the gate voltage of thyristors 51 and 52 is lower than a rated gate voltage (using characteristics that the ON-resistance is high when the gate voltage of the thyristors 51 and 52 is low). As a result, the current is limited by the ON-resistor at a high point of the ON-resistance of the thyristor 51 and 52. As described later in third and fourth embodiments, the current can be limited without providing the current limiting element 63.

### (Third Embodiment)

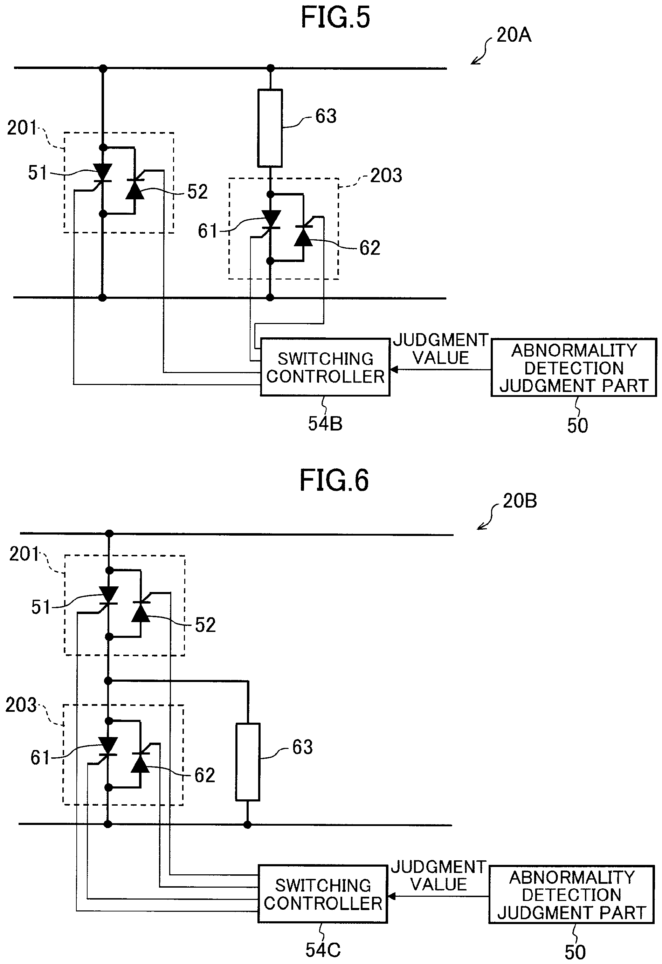

Fig. 5 is a diagram showing a configuration of a short-circuit switch unit connected to an input terminal (input side) of the power conversion system according to a third embodiment of the present invention. In this embodiment, like reference numerals denote like elements in Fig. 2.

As shown in Fig. 5, a short-circuit switch unit 20A of the power conversion system according to the present embodiment is an example in which a current limiting element 63 is added other than the thyristors 51 and 52 of the short-circuit switch unit 20 shown in Fig. 2.

As for the short-circuit switch unit 20A, the current limiting element 63 is provided in parallel with the thyristors 51 and 52 being the first short-circuit switch 201. Further, the thyristors 61 and 62 being the second short-circuit switch 203 are provided in series with the current limiting element 63 and in parallel with the first short-circuit switch 201.

The current limiting element 63 is an element for suppressing current being formed of a resistor or a coil.

The switching controller 54B is a gate driver for driving gates of the thyristors 51, 52, 61, and 62.

In the above configuration, the short-circuit switch unit 20A impresses gate voltages of the thyristors 51, 52, 61, and 62 so as to close the second short-circuit switch 203 before the first short-circuit switch 201. After a failure current is reduced by the current limiting element 63, the first short-circuit switch 201 is closed.

As explained above, the short-circuit switch unit 20A includes the first short-circuit switch 201 and the second short-circuit switch 202 provided in parallel, and includes the current limiting element 63 connected in parallel with the first short-circuit switch 201 and, also, connected in series with the second short-circuit switch 202. When a short circuit failure of the power converter unit 10 is detected, the switching controller 54B activates the second short-circuit switch 202 to limit current with use of the current limiting element 63 and, after a predetermined delay time, turns the first short-circuit switch 201 into a conductive state.

That is, after a failure judgment, the switching controller 54B puts in the second short-circuit switch 203 (thyristors 61 and 62) immediately, and limits current by the current limiting element 63. While the current is being limited by the current limiting element 63, the first short-circuit switch 201 (thyristors 51 and 52) is activated with a delay time Td (see Fig. 3) provided. Then, in order to suppress a leakage current of the second short-circuit switch 203 and to reduce loss of the gate voltage of the thyristors 61 and 62, the second short-circuit switch 203 (thyristors 61 and 62) is turned off. Also, conditions for the timing in turning off the second short-circuit switch 203 are gentle.

Thus, according to the present embodiment, by using the current limiting element 63 which compulsorily reduces a current, as in the first and second embodiments, the short-circuit switch unit 20A can immediately and reliably conduct short-circuiting without putting in the short-circuit switch after a short-circuit current has been limited.

When commutating a surge current to a short-circuit switch, a current value flowing in the short-circuit switch can be suppressed. Thus, the surge current withstand specification of the short-circuit switch which bypasses a failed unit can be reduced, and a small and economical element can be applied to the short-circuit switch.

### (Fourth Embodiment)

Fig. 6 is a diagram showing a configuration of a short-circuit switch unit connected to an input terminal (input side) of a power conversion system according to a fourth embodiment of the present invention. In this embodiment, like reference numerals denote like elements in Fig. 5.

As shown in Fig. 6, like the short-circuit switch unit 20A shown in Fig. 5, a short-circuit switch unit 20B of the power conversion system according to the present embodiment includes a current limiting element 63.

As for the short-circuit switch unit 20B, the current limiting element 63 is provided in series with the thyristors 51 and 52 being the third short-circuit switch 201. Further, the thyristors 61 and 62 being the fourth short-circuit switch 203 are provided in parallel with the current limiting element 63.

The switching controller 54C is a gate driver for driving gates of thyristors 51, 52, 61, and 62.

In the above configuration, the short-circuit switch unit 20B controls such that the third short-circuit switch 201 (thyristors 51 and 52) is closed instantly after a failure current is detected and that a delay time is provided and the fourth short-circuit switch 203 (thyristors 61 and 62) is closed.

Accordingly, after the third short-circuit switch 201 being closed, part of the surge current commutates and flows into the current limiting element 63. The surge current which flows in the third short-circuit switch 201 is suppressed to a withstand surge current or lower by the current limiting element 63. After the surge current has been reduced, resistance of the whole short-circuit switch is made small by closing the fourth short-circuit switch 203 (thyristors 61 and 62) and bypassing the current limiting element 63.

As explained above, the short-circuit switch unit 20B includes: the third short-circuit switch 201 and the fourth short-circuit switch 203 provided in series; and the current limiting element 63 provided in series with the third short-circuit switch 201 and connected in parallel with the fourth short-circuit switch 203. When a short circuit failure of the power converter unit 10 is detected, the switching controller 54C activates the third short-circuit switch 201 to limit current with use of the current limiting element 63 and, after a predetermined delay time, turns the fourth short-circuit switch 203 into a conductive state.

Thus, according to the present embodiment, by using the current limiting element 63 which compulsorily reduces a current, as in the third embodiment, the short-circuit switch unit 20B can immediately and reliably conduct short-circuiting without putting in the short-circuit switch after a short-circuit current has been limited.

When commutating a surge current to a short-circuit switch, a current value flowing in the short-circuit switch can be suppressed. Accordingly, the surge current withstand specification of the short-circuit switch bypassing the failure unit can be reduced, and a small and economical element can be applied to the short-circuit switch.

In addition, as for the AC/DC converter configuration, the fourth short-circuit switch 202 may be omitted in the short-circuit switch unit provided in the DC terminal.

The present invention is not limited to the above embodiments, and includes various modifications and applications within the scope of the invention described in the claims.

For example, the short-circuit switch may be provided in either the input terminal or the output terminal of the power converter unit. Also, a part of a configuration of one embodiment can be replaced with a configuration of another embodiment. Further, a configuration in one embodiment can be added to a configuration in another embodiment. Still further, with respect to a part of a configuration in each embodiment, addition, deletion, and replacements of the other configurations may be made.

Moreover, as for control lines and information lines, what is considered to be required in terms of explanation is shown, and all the control lines and information lines in a product are not necessarily shown. In fact, it may be considered that almost all the configurations are connected mutually.

## Claims

1. A power conversion system having a plurality of power converter units connected in series, comprising:
a short-circuit switch provided on an input side and/or an output side of the power conversion unit and bypassing the power converter unit; and
a controller for controlling timing in which the short-circuit switch is turned into a conductive state.

2. The power conversion system according to claim 1, wherein, when a short-circuit failure of the power converter unit is detected, the controller turns the short-circuit switch into a conductive state after a predetermined delay time.

3. The power conversion system according to claim 1, wherein the short-circuit switch is a semiconductor switching element which is driven in response to a gate voltage from the controller, and
wherein, when a short-circuit failure of the power converter unit is detected, the controller gently raises the gate voltage to be impressed to the semiconductor switching element to a rated gate voltage.

4. The power conversion system according to claim 1,
wherein the short-circuit switch includes a first short-circuit switch and a second short-circuit switch connected in parallel,
wherein the short-circuit switch includes a current suppression element connected in parallel with the first short-circuit switch and, also, in series with the second short-circuit switch, and
wherein, when a short-circuit failure of the power converter unit is detected, the controller activates the second short-circuit switch to limit current with use of the current limiting element and turns the first short-circuit switch into a conductive state after a predetermined delay time.

5. The power conversion system according to claim 1, wherein the short-circuit switch includes a third short-circuit switch and a fourth short-circuit switch connected in series,
wherein the short-circuit switch includes a current suppression element connected in series with the third short-circuit switch and, also, in parallel with the fourth short-circuit switch, and
wherein, when a short-circuit failure of the power converter unit is detected, the controller activates the third short-circuit switch to limit current with use of the current suppression element and turns the fourth short-circuit switch into a conductive state after a predetermined delay time.
